# EUROPÄISCHE PATENTSCHRIFT

(11) **EP 1 403 873 B1**
(45) Veröffentlichungstag und Bekanntmachung des Hinweises auf die Patenterteilung: **29.10.2008**
(21) Anmeldenummer: 03015907.3
(22) Anmeldetag: 11.07.2003
(51) Int. Cl.: G11B 33/12

(54) **Halteschiene zur Festlegung einer Einschub-Baugruppe in einem Einbaukäfig eines Computers**
Holding rail for fixing an insertable unit in a computer rack
Rail de suspension pour la fixation d'une unité à insérer dans une baie d'ordinateur

(30) Priorität: 26.09.2002 DE 10244887
(43) Veröffentlichungstag der Anmeldung: 31.03.2004
(73) Patentinhaber: Fujitsu Siemens Computers GmbH, 80807 München (DE)
(72) Erfinder: Scherer, August, 86424 Dinkelscherben (DE); Neukam, Wilhelm, 86399 Bobingen (DE)
(74) Vertreter: Epping - Hermann - Fischer

(56) Entgegenhaltungen:
- US-A1- 5 654 873
- US-A1- 6 067 225
- US-B1- 6 313 985
- US-B1- 6 469 889

## Beschreibung

Die Erfindung betrifft eine Halteschiene zur Festlegung einer Einschub-Baugruppe in einem Einbaukäfig eines Computers, die seitlich an die Einschub-Baugruppe ansteckbar ist.

Bei Einschub-Baugruppen besteht immer das Bestreben, diese ohne die Verwendung von Schrauben in dem Einbaukäfig festzulegen. Dazu vorgesehene Halteschienen sind beispielsweise aus der EP 0 834 880 A1 bekannt. Die dort verwendeten Halteschienen werden an die Einschub-Baugruppe angesteckt und zusammen mit dieser in dem Einbaukäfig befestigt. Die bekannten Halteschienen sind jedoch verhältnismäßig aufwendig und der horizontale und vertikale Toleranzausgleich ist nicht optimal.

Es ist ein Problem, daß die Einbaukäfige relativ große Toleranzen haben und daher eingebaute Einschub-Baugruppen vertikal und horizontal gewisse Spielräume aufweisen. In vielen Fällen ist eine solche Befestigung der Einschub-Baugruppe in einem Baukäfig nicht ausreichend. Bei Betrieb der Einschub-Baugruppe treten dann aufgrund von Vibrationen Probleme auf, die einen einwandfreien Betrieb der Einschub-Baugruppe stören. Vor allem bei CD-ROM-Laufwerken, die mit sehr großer Drehzahl arbeiten und dabei oft mit CD-ROMs verwendet werden, die eine Unwucht aufweisen, führt eine unzureichende Befestigung im Einbaukäfig zu erheblichen Geräuschbelästigungen.

Das von den Herstellern der Einschub-Baugruppen empfohlene Anschrauben der Einschub-Baugruppen am Einbaukäfig ist unwirtschaftlich und nicht kundenfreundlich, da zum Anschrauben Zeit und Werkzeug benötigt wird. Andererseits kann es durch heruntergefallene Schrauben im Computer zu Kurzschlüssen und anderen Problemen kommen.

Aus der TW 467,359 Y ist eine Halteschiene umfassend eine Schiene und ein an der Schiene befestigtes, elektrisch leitfähiges Halteteil bekannt. Das Halteteil umfasst eine Mehrzahl elastischer Finger und elastischen Fuhrungsfeders zum Herstellen einer elektrischen Verbindung mit einem Computergehäuse.

Der Erfindung liegt daher die Aufgabe zugrunde, an einer Einschub-Baugruppe ansteckbare Halteschienen so auszugestalten, daß eine sichere Befestigung in einem Einbaukäfig sichergestellt ist und dennoch eine einfache Montage möglich ist. Dabei soll insbesondere die Montage schwerer Einschub-Baugruppen möglich sein, die eine erhöhte Stabilität zur Befestigung erfordert.

Diese Aufgabe wird durch eine Halteschiene der eingangs genannten Art gelöst, die dadurch gekennzeichnet ist, daß die Halteschiene ein Kunststoffelement und ein Metallelement aufweist, wobei das Metallelement das Kunststoffelement zumindest abschnittsweise passend umfaßt, und daß das Metallelement federnde Halteelemente besitzt die ausgebildet sind zur Zusammenwirkung mit Führungselementen des Einbaukäfigs, und daß das Kunststoffelement federnde Abschnitte aufweist zur Herstellung eines seitlichen Toleranzausgleichs zu den Seitenwänden des Einbaukäfigs.

Bei der erfindungsgemäßen Halteschiene handelt es sich um eine besonders vorteilhafte Kombination von Metall- und Kunststoffelementen. Durch die federnden Haltelemente des Metallelementes ist eine vertikale Festlegung erzielt, wobei auch die hohen Kräfte durch schwere Einschub-Baugruppen aufgefangen werden. Darüber hinaus sorgt das Metallelement für eine sichere elektrische Massenanbindung der Einschub-Baugruppe. Durch das Kunststoffelement sind optimale federnde Eigenschaften für den seitlichen Toleranzausgleich herstellbar.

In einer besonders vorteilhaften Ausführung sind unterhalb der federnden Halterelemente des Metallelementes an dem Kunststoffelement federnde Unterfütterungselemente aus Kunststoff vorgesehen, die verhindern, daß bei einer starken mechanischen Belastung die federnden Halteelemente verbogen werden und danach kein satter Sitz mehr gewährleistet ist.

Weiterhin ist vorteilhaft, daß das Metallelement vier federnde Metallelemente aufweist zum Zusammenwirken mit Führungselementen eines Einbaukäfigs, so daß sämtliche Befestigungspunkte der Einschub-Baugruppe federnd ausführbar sind.

In einer bevorzugten Ausführungsform ist eine Abstufung vorgesehen, wobei das zuerst einzuschiebende Ende der Halteschiene eine geringere Höhe aufweist als das andere Ende der Halteschiene. Dadurch ist dafür gesorgt, daß beim Einschieben wenig Kraft aufgewendet werden muß und erst im letzten Moment die vier federnden Halteelemente die Halteschiene gegenüber den Führungselementen des Einbaukäfigs festlegen.

Weiterhin ist vorteilhaft, wenn vertikale und horizontale Metall-Zapfen an dem Metallelement vorgesehen sind, die in entsprechende Löcher einer Einschub-Baugruppe einsteckbar sind und die eine exakte Lagezentrierung in der Höhe bzw. in der Tiefe bewirken. Diese Zapfen können direkt aus dem Metallelement gebogen werden oder durch eingenietete Metallzapfen realisiert werden.

Weitere vorteilhafte Ausgestaltungen der Erfindung sind in den Unteransprüchen angegeben.

Die Erfindung wird nachfolgend anhand eines Ausführungsbeispieles näher erläutert. Es zeigt:
- Figur 1: eine Anordnung, bei der eine Einschub-Baugruppe mit einer erfindungsgemäßen Halteschiene in einem Einbaukäfig festgelegt wird,
- Figur 2: die Befestigung zweier Halteschienen an einer Einschub-Baugruppe,
- Figur 3: die Außenseite einer erfindungsgemäßen Halteschiene,
- Figur 4: die Innenseite der Halteschiene von Figur 3 und
- Figur 5: einen Querschnitt durch die Halteschiene von Figur 3 und 4.

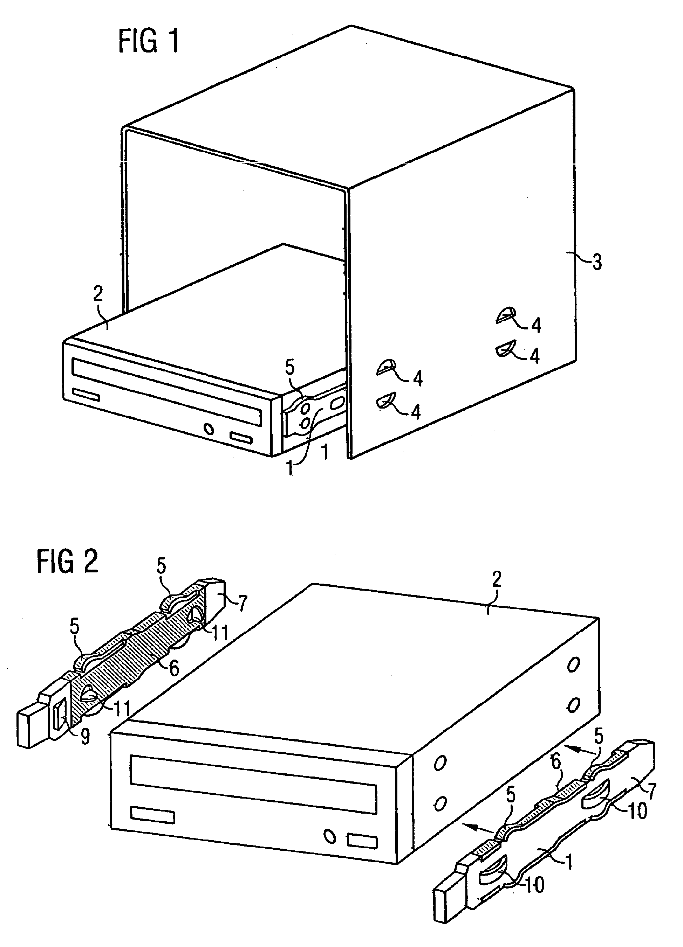

In der Figur 1 ist dargestellt, wie eine Einschub-Baugruppe 2, in diesem Fall ein CD-ROM-Laufwerk, unter Zuhilfenahme von Halteschienen 1 in einem Einbaukäfig 3 eines Computers festgelegt ist.

Der Einbaukäfig 3 weist Lappen 4 auf, die aus der Seitenwand des Einbaukäfigs 3 ausgestanzt und senkrecht abgebogen sind, so daß sie Führungselemente für die Halteschiene 1 bilden. In einer abgewandelten Ausführungsform sind als Führungselemente eingenietete Zapfen vorgesehen. Die Halteschiene 1 ist mit federnden Halteelementen 5 versehen, die im vollständig eingeschobenen Zustand mit den Führungselementen 4 des Einbaukäfigs 3 zusammenwirken.

In der Figur 2 ist das CD-ROM-Laufwerk von Figur 1 sowie die Halteschienen 1 dargestellt, wobei die Halteschienen 1 detaillierter zu erkennen sind. Sie bestehen aus einem Kunststoffelement 7 und einem Metallelement 6, wobei das Metallelement 6 das Kunststoffelement 7 umfaßt. Die federnden Halteelemente 5 sind verhältnismäßig steif und dem hohen Gewicht des CD-ROM-Laufwerks angepaßt. An dem Metallelement 6 sind darüber hinaus Zapfen 11 ausgebildet, die in entsprechende Löcher des CD-ROM-Laufwerks 2 eingesteckt werden können, so daß das Metallelement 6 an dem CD-ROM-Laufwerk festgelegt ist. Vertikal ist das CD-ROM-Laufwerk auf diese Weise sicher befestigt. Toleranzen können gut ausgeglichen werden, wobei trotzdem bei Stößen sichergestellt ist, daß diese durch die federnden Halteelemente 5 abgemildert werden. Die Zapfen 11 sind in dem gezeigten Ausführungsbeispiel als abgebogene Lappen realisiert. Alternativ sind auch eingenietete Zapfen einsetzbar.

Allein durch das Metallelement 6 ist jedoch noch kein seitlicher Toleranzausgleich gegeben. Dazu dient das Kunststoffelement 7, welches auf der vom CD-ROM-Laufwerk abgewandten Seite federnde Abschnitte 10 aufweist, welche im eingebauten Zustand gegen die Seitenwandung des Einbaukäfigs 3 drücken und somit eine Toleranz ausgleichen können. Die Federung zur Seite hin muß dabei viel weicher sein als in der Vertikalen, da das CD-ROM-Laufwerk 2 nicht mit seinem Gewicht auf die federnden Abschnitte 10 drückt. Hier ist insbesondere die Kombination der Halteschiene 1 aus einem Kunststoff- in einem Metallelement von Vorteil, da sich mit einem reinen Metallelement sehr unterschiedliche federnden Eigenschaften nur sehr schlecht und unter großem Aufwand einstellen lassen.

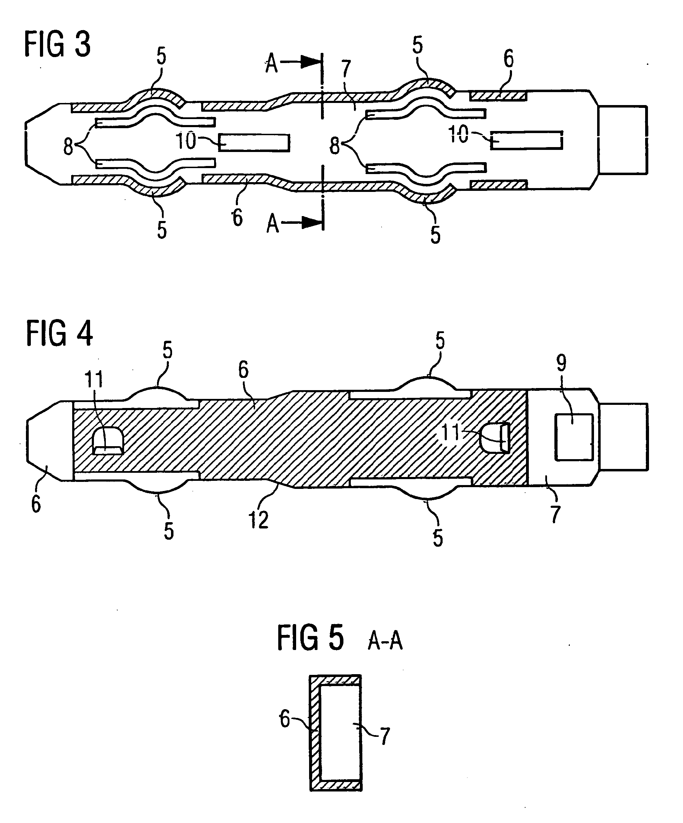

In der Figur 3 ist eine Halteschiene in einer Seitenansicht gezeigt, wobei die dem CD-ROM-Laufwerk 2 abgewandte Seite zu sehen ist. In dieser Darstellung ist zusätzlich zu erkennen, daß Kunststoffunterfütterungen vorgesehen sind, die verhindern, daß bei einer mechanischen Belastung der federnden Halteelemente 5 überbogen werden und danach keinen satten Sitz mehr gewährleisten. Die Kunststoffunterfütterung 8 weist ebenso federnde Eigenschaften auf.

In der Figur 4 ist die Halteschiene von Figur 2 von der anderen Seite her zu sehen, wo sie also mit dem CD-ROM-Laufwerk 2 oder einer anderen Einschub-Baugruppe in Kontakt steht. Von den zwei Zapfen 11, die in Löcher des CD-ROM-Laufwerks 2 eingesteckt werden können und die als Lappen ausgebildet sind, die aus dem Metallelementen hinausgebogen sind, ist einer horizontal ausgerichtet, während der andere vertikal ausgerichtet ist. Alternativ vorgesehene eingenietete Zapfen wären entsprechend positioniert. Durch den horizontal ausgerichteten Lappen 11 ist eine perfekte Lagezentrierung in der Tiefe gegeben, während durch den vertikal ausgerichteten Lappen 11 eine Lagezentrierung in der Höhe gegeben ist.

Weiterhin ist ein Rastelement 9 vorgesehen, das mit einem geeigneten Gegenrastelement des Einbaukäfigs 3 verrasten kann und somit ein Herausrutschen der Einschub-Baugruppe 2 aus dem Einbaukäfig 3 verhindert.

Die Halteschienen sind so ausgeführt, daß in einem in Einschubrichtung vorderen Bereich die Höhe geringer ist als in einem hinteren Bereich, was durch eine Abstufung zwischen diesen Bereichen erreicht wird. Aufgrund dieser Ausgestaltung ist eine Einschub-Baugruppe mit daran befestigten Halteschienen 1 mit sehr geringem Kraftaufwand in den Einbaukäfig 3 einführbar und erst kurz vor dem Erreichen der entgültigen Position treten die federnden Halteelemente 5 mit den Führungselementen 4 in Kontakt. Durch eine weitere Kraftaufwendung in Einschubrichtung werden die federnden Halteelemente 5 zusammengedrückt und gewährleisten somit einen sicheren Sitz, auch wenn die Bewegungstoleranzen des Einbaukäfigs 3 sehr groß sind. Da die federnden Abschnitte des Kunststoffelementes 7 wesentlich weicher sind als die federnden Halteelemente 5, ist in der Horizontalen keine Abstufung notwendig. Der Widerstand, der sich aufgrund der federnden Eigenschaften der federnden Abschnitte 10 dem einschiebenden Benutzer entgegenstellt, ist verhältnismäßig gering.

Die Figur 5 zeigt einen Querschnitt durch die Halteschiene der Figuren 3 und 4. In dieser ist zu erkennen, daß das Metallelement 6 die Form eines Us besitzt, das das Kunststoffelement 7 in diesem Bereich von drei Seiten umschließt.

Statt abgebogene Lappen des Einbaukäfigs 3 als Führungselemente zu verwenden, können auch spezielle Führungsschienen eingesetzt werden, die mit den Seitenwänden des Einbaukäfigs verbunden sind.

### Bezugszeichenliste

- 1: Halteschiene
- 2: Einschub-Baugruppe
- 3: Einbaukäfig
- 4: Führungselemente
- 5: federnde Halteelemente
- 6: Metallelement
- 7: Kunststoffelement
- 8: Kunststoffunterfütterung
- 9: Rastelement
- 10: federnder Abschnitt
- 11: Zapfen
- 12: Abstufung

## Patentansprüche

1. Halteschiene zur Festlegung einer Einschub-Baugruppe (2) in einem Einbaukäfig (3) eines Computers, die seitlich an die Einschub-Baugruppe (2) ansteckbar ist,
**dadurch gekennzeichnet, daß**
die Halteschiene (1) ein Kunststoffelement (7) und ein Metallelement (6) aufweist, wobei das Metallelement (6) das Kunststoffelement (7) zumindest abschnittsweise passend umfaßt und
daß das Metallelement (6) federnde Haltelemente (5) besitzt die ausgebildet sind zur Zusammenwirkung mit Führungselementen (4) des Einbaukäfigs (3) und
daß das Kunststoffelement (7) federnde Abschnitte (10) aufweist zur Herstellung eines seitlichen Toleranzausgleichs zu den Seitenwänden des Einbaukäfigs (3).

2. Halteschiene nach Anspruch 1,
**dadurch gekennzeichnet, daß**
unterhalb der federnden Halteelemente (5) an dem Kunststoffelement (7) federnde Unterfütterungselemente (8) aus Kunststoff vorgesehen sind.

3. Halteschiene nach Anspruch 1 oder 2,
**gekennzeichnet durch**
eine Abstufung, wobei das zuerst einzuschiebende Ende der Halteschiene (1) eine geringere Höhe aufweist als das andere Ende der Halteschiene (1).

4. Halteschiene nach einem der Ansprüche 1 bis 3,
**dadurch gekennzeichnet, daß**
das Metallelement (6) vier federnde Halteelemente (5) aufweist zur Zusammenwirkung mit Führungselementen (4) eines Einbaukäfigs (3).

5. Halteschiene nach einem der Ansprüche 1 bis 4,
**dadurch gekennzeichnet, daß**
an dem Metallelement (6) Zapfen ausgebildet sind zum Einstekken in Löcher der Einschub-Baugruppe (2).

6. Halteschiene nach Anspruch 5,
**dadurch gekennzeichnet, daß**
die Zapfen (11) durch Lappen gebildet sind, wobei einer der Lappen horizontal und der andere Lappen vertikal ausgebildet ist.

7. Halteschiene nach Anspruch 5,
**dadurch gekennzeichnet, daß**
die Zapfen (11) eingenietet sind.

8. Halteschiene nach einem der Ansprüche 1 bis 7,
**dadurch gekennzeichnet, daß**
ein Rastelement (9) vorgesehen ist zur Verrastung der Halteschiene (1) in Gegenrastelementen des Einbaukäfigs (3).

9. Anordnung mit
- einem Einbaukäfig (3),
- einer Einschub-Baugruppe (2) und
- Halteschienen (1) nach einem der Ansprüche 1 bis 7 zur Festlegung der Einschub-Baugruppe (2) in den Einbaukäfig (3).

## Claims

1. Retaining rail for fixing a slide-in module (2) in a mounting cradle (3) of a computer which can be attached laterally to the slide-in module (2), **characterized in that** the retaining rail (1) has a plastic element (7) and a metal element (6), the metal element (6) closely enclosing at least certain portions of the plastic element (7), and **in that** the metal element (6) has resilient retaining elements (5) formed for interaction with guiding elements (4) of the mounting cradle (3) and **in that** the plastic element (7) has resilient portions (10) for establishing lateral tolerance compensation with respect to the side walls of the mounting cradle (3).

2. Retaining rail according to Claim 1, **characterized in that** resilient underlay elements (8) of plastic are provided underneath the resilient retaining elements (5) on the plastic element (7).

3. Retaining rail according to Claim 1 or 2, **characterized by** a graduation, the first end to be pushed in of the retaining rail (1) having a lower height than the other end of the retaining rail (1).

4. Retaining rail according to one of Claims 1 to 3, **characterized in that** the metal element (6) has four resilient retaining elements (5) for interaction with guiding elements (4) of a mounting cradle (3).

5. Retaining rail according to one of Claims 1 to 4, **characterized in that** studs are formed on the metal element (6) for insertion into holes of the slide-in module (2).

6. Retaining rail according to Claim 5, **characterized in that** the studs (11) are formed by tabs, one of the tabs being formed horizontally and the other tab being formed vertically.

7. Retaining rail according to Claim 5, **characterized in that** the tabs (11) are riveted in.

8. Retaining rail according to one of Claims 1 to 7, **characterized in that** a latching element (9) is provided for latching the retaining rail (1) in mating latching elements of the mounting cradle (3).

9. Arrangement with
- a mounting cradle (3),
- a slide-in module (2) and retaining rails (1) according to one of claims 1 to 7 for fixing the slide-in module (2) in the mounting cradle (3).

## Revendications

1. Rail de suspension pour la fixation d'une unité à insérer (2) dans une baie (3) d'ordinateur, qui peut être rattaché latéralement à l'unité à insérer (2),
**caractérisé en ce que**
le rail de suspension (1) présente un élément en plastique (7) et un élément en métal (6), l'élément en métal (6) entourant de manière ajustée l'élément en plastique (7) au moins en partie, et **en ce que** l'élément en métal (6) possède des éléments de suspension élastiques (5) qui sont conçus pour coopérer avec des éléments de guidage (4) de la baie (3), et
**en ce que** l'élément en plastique (7) présente des portions élastiques (10) pour la création d'une compensation des tolérances latérales vers les parois latérales de la baie (3).

2. Rail de suspension selon la revendication 1,
**caractérisé en ce que**
des éléments de renfort élastiques (8) en plastique sont prévus en dessous des éléments de suspension élastiques (5) sur l'élément en plastique (7).

3. Rail de suspension selon la revendication 1 ou 2,
**caractérisé par**
un gradin, l'extrémité à insérer en premier du rail de suspension (1) présentant une plus faible hauteur que l'autre extrémité du rail de suspension (1).

4. Rail de suspension selon l'une quelconque des revendications 1 à 3,
**caractérisé en ce que**
l'élément en métal (6) présente quatre éléments de suspension élastiques (5) pour coopérer avec des éléments de guidage (4) d'une baie (3).

5. Rail de suspension selon l'une quelconque des revendications 1 à 4,
**caractérisé en ce que**
des tourillons sont réalisés sur l'élément en métal (6), pour l'insertion dans des trous de l'unité à insérer (2).

6. Rail de suspension selon la revendication 5,
**caractérisé en ce que**
les tourillons (11) sont formés par des pattes, l'une des pattes étant horizontale et l'autre verticale.

7. Rail de suspension selon la revendication 5,
**caractérisé en ce que**
les tourillons (11) sont rivetés.

8. Rail de suspension selon l'une quelconque des revendications 1 à 7,
**caractérisé en ce**
**qu'**un élément d'encliquetage (9) est prévu pour encliqueter le rail de suspension (1) dans des éléments d'encliquetage conjugués de la baie (3).

9. Agencement comprenant :
- une baie (3),
- une unité à insérer (2) et
- des rails de suspension (1) selon l'une quelconque des revendications 1 à 7, pour la fixation de l'unité à insérer (2) dans la baie (3).
